# EUROPÄISCHE PATENTSCHRIFT

(11) **EP 2 140 119 B1**
(45) Veröffentlichungstag und Bekanntmachung des Hinweises auf die Patenterteilung: **07.09.2011**
(21) Anmeldenummer: 08749103.1
(22) Anmeldetag: 24.04.2008
(51) Int. Cl.: F02C 6/12, F04D 29/42, F04D 29/66

(54) **VERDICHTER FÜR EINEN ABGASTURBOLADER**
COMPRESSOR FOR AN EXHAUST GAS TURBOCHARGER
COMPRESSEUR POUR TURBOCOMPRESSEUR À GAZ D'ÉCHAPPEMENT

(30) Priorität: 27.04.2007 DE 102007019884
(43) Veröffentlichungstag der Anmeldung: 06.01.2010
(73) Patentinhaber: Bayerische Motoren Werke Aktiengesellschaft, 80809 München (DE)
(72) Erfinder: HOLLNBUCHNER, Bernd, A-4451 Garsten (AT); BERGER, Herbert, A-4312 Ried (AT); FISCHER, Daniel, 81249 München (DE)
(86) Internationale Anmeldenummer: PCT/EP2008/003304
(87) Internationale Veröffentlichungsnummer: WO 2008/135173

(56) Entgegenhaltungen:
- WO-A-02/052110
- WO-A-2006/090152
- DE-A1- 10 223 876
- DE-A1- 10 332 025
- FR-A- 2 878 914

## Beschreibung

Aus der WO 2006/090152 A1, von der die vorliegende Erfindung ausgeht und die alle Merkmale des Oberbegriffs des Anspruchs 1 enthält, ist ein Verdichter für einen Abgasturbolader bekannt. Das Verdichtergehäuse weist einen Gas-Ansaugstutzen auf, wobei der Gas-Ansaugstutzen den Gas-Einströmbereich radial umschließt. In dem Verdichtergehäuse ist ein von einer Abgasturbine antreibbares Verdichterrad anordenbar. Ein zum Gas-Ansaugstutzen radial innen angeordneter Ring weist einströmseitig Bohrungen auf, die in der Strömungsrichtung der Ladeluft bis zum Verdichterrad reichen. Diese Bohrungen sind als Helmholtz-Resonatoren ausgelegt, um störende Strömungsgeräusche zu dämpfen.

Weiter ist aus der WO 02/052110 A1 ein akustischer Überzug im Eingangsbereich eines Fluidverdichters bekannt. Die Verwendung des Überzugs könnte, auch wenn er nicht dafür vorgesehen ist, in einem Verdichter eines Abgasturboladers denkbar sein. Die akustische Wirkung wird dadurch erzielt, dass in Platten Bohrungen eingebracht werden, die als Helmholtz-Resonatoren wirken und somit akustische Geräusche wirkungsvoll dämpfen.

Weiter ist aus der DE 103 32 025 A1 ein Verdichter für eine Brennkraftmaschine bekannt, dessen Arbeitsbereich mit einer einfachen Maßnahme erweitert ist. Dies wird dadurch erzielt, dass im Anströmbereich des Verdichterrades ein Totraum angeordnet ist, der über eine benachbart zur Radeintrittskante des Verdichterrades

Die Erfindung betrifft einen Verdichter für einen Abgasturbolader mit den Merkmalen aus dem Oberbegriff des Patentanspruchs 1. gelegene Verbindungsöffnung ausschließlich mit dem Verdichtereinlasskanal kommuniziert.

Die DE 102 23 876 A1 offenbart ebenfalls einen Verdichter für eine Brennkraftmaschine, der auch über einen längeren Betriebszeitraum hohe Verdichterleistungen generieren kann. Dies wird dadurch erzielt dass der Verdichter eine Rezirkulationseinrichtung aufweist, über die ein Teilmassenstrom der herangeführten Verbrennungsluft entgegen der Hauptströmungsrichtung aus dem Bereich des Verdichterrades in den dem Verdichterradeintritt vorgelagerten Anströmbereich zurückgeführt wird. Die Rezirkulationseinrichtung umfasst einen Rezirkulationsschlitz in der Wandung des Deckringes sowie einen Rezirkulationskanal in der den Einströmkanal begrenzenden Wandung. Der Rezirkulationskanal ist als umlaufende nutförmige Ausnehmung in der Innenwand des Einströmkanal ausgeführt und bildet einen halboffenen Strömungsweg für den rückzuführenden Teilmassenstrom, welcher radial durch den oder die Rezirkulationsschlitze in der Wand des Deckringes nach außen in den Rezirkulationskanal strömt und axial über den Verdichterradeintritt bis zum Anströmbereich des Verdichterrades zurückgeleitet wird. Die Rezirkulationseinrichtung hat die Funktion einer Kennfeldstabilisierungsmaßnahme, über die die Pumpgrenze des Verdichters zugunsten kleinerer Durchsätze verschoben und der Arbeitsbereich des Verdichters entsprechend vergrößert wird.

Auch aus der FR 2 878 914 ist ein Verdichter für eine Brennkraftmaschine bekannt, mit einem Spiralkanal zur Zuführung der Frischluft in den Einströmbereich des Verdichters. Der Hauptfrischluftzuführkanal ist mit einer Klappe verschließbar. Durch diese Maßnahme erhält die angesaugte Frischluft einen Drall, bevor sie auf das Verdichterrad strömt.

Nachteilig an der Oberflächengestaltung der Gaseinströmkontur gemäß der WO 2006/090152 A1 ist die sehr aufwendige Fertigung der Bohrungen und eine nicht ausreichende akustische Wirkung im Bereich der Pumpgrenze.

Aufgabe der vorliegenden Erfindung ist es, eine Maßnahme aufzuzeigen, wie eine einfach herstellbare, das Strömungsgeräusch minimierende Struktur, insbesondere im Bereich der Pumpgrenze für einen Abgasturbolader darstellbar ist, ohne Wirkungsgradverluste des Abgasturboladers in Kauf zu nehmen.

Diese Aufgabe wird durch das Merkmal im kennzeichnenden Teil des Patentanspruchs 1 gelöst.

Durch die erfindungsgemäße Ausgestaltung werden vor allem drei unterschiedliche, vorteilhafte Effekte erzielt:

### 1. Akustik:

Die Strömungsgeräusche selbst im Normalbetrieb und die akustischen Auswirkungen im Pumpfall werden deutlich reduziert.

### 2. Strömung:

Die Luftmassenschwingungen beim Pumpen werden im Einströmbereich deutlich reduziert, die Ansaugströmung wird im Normalbetrieb deutlich vergleichmäßigt.

### 3. Kosten:

Die erfindungsgemäße Ausgestaltung ist besonders leicht in bestehende Technik integrierbar, großvolumige und teure Resonatoren in der Luftführung können entfallen.

Die Dimensionen für die Vertiefungen gemäß der Patentansprüche 2 und 3 sind besonders bevorzugte Bereiche, in denen sämtliche Vorteile am besten erzielt werden.

Die Anordnung der Vertiefungen gemäß Patentanspruch 4 sind wiederum besonders bevorzugte Ausführungsvarianten.

Die Herstellung der Vertiefungen gemäß Patentanspruch 5 sind besonders bevorzugte Herstellungsverfahren.

Die Ausgestaltung gemäß Patentanspruch 6 ist eine besonders einfach nachrüstbare Lösung.

Im Folgenden ist die Erfindung anhand eines besonders bevorzugten Ausführungsbeispieles in einer einzigen Figur näher erläutert.

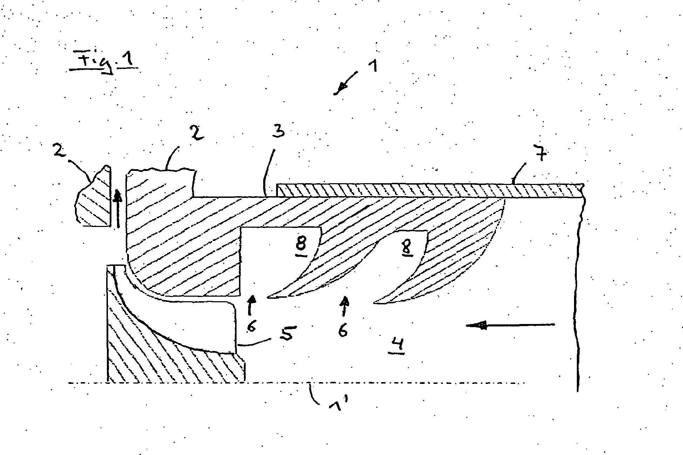

- Fig. 1: zeigt einen Halbschnitt durch einen erfindungsgemäß ausges- talteten Gas-Einströmbereich für einen Verdichter eines Abgas- turboladers.

Fig. 1 zeigt einen Halbschnitt durch einen erfindungsgemäß ausgestalteten Gas-Einströmbereich 4 für einen Verdichter 1 eines Abgasturboladers. Schnittflächen sind schraffiert dargestellt. Der Gas-Einströmbereich 4 des Verdichters 1 ist radialsymmetrisch um eine Achse 1' des Abgasturboladers angeordnet und wird radial außen von einem Gasansaugstutzen 3 eines Abgasturboladergehäuse 2 begrenzt. Eine Gaseinströmrichtung ist schematisch mit Pfeilen dargestellt. Über den Gasansaugstutzen 3 ist radial außen ein Reinluftrohr 7 aufgeschoben. In dem Abgasturboladergehäuse 2 rotiert ein von einer nicht dargestellten Abgasturbine angetriebenes Verdichterrad 5 radialsymmetrisch um die Achse 1', um aus dem Reinluftrohr 7 und dem Gas-Ansaugstutzen 3 kommendes Gas radial nach außen in eine nicht dargestellte Verdichterschnecke des Verdichters 1 zu fördern. Der Gas-Einströmbereich 4 wird in Strömungsrichtung des Gases von dem Verdichterrad begrenzt. Erfindungsgemäß weist der Gasansaugstutzen 3 radial umlaufende Vertiefungen 6 auf, die in dem besonders bevorzugten Ausführungsbeispiel Hinterschneidungen 8 entgegen der Strömungsrichtung des Gases aufweisen.

Abweichend von diesem besonders bevorzugten Ausführungsbeispiel können die Vertiefungen 6 auch einfache Löcher oder radial umlaufende Nuten sein, die in Strömungsrichtung bis zum Verdichterrad 5 in den Gas-Ansaugstutzen eingebracht sind. Eine besonders bevorzugte Tiefe der Vertiefungen 6 liegt zwischen 0,5 mm und 5 mm, da in diesem Größenbereich der Gasansaugstutzen 3 nicht wesentlich in seiner mechanischen Festigkeit beeinträchtigt wird. Weiter weisen die Vertiefungen 6 bevorzugt einen Durchmesser bzw. in Strömungsrichtung des Gases eine Breite zwischen 0,5 mm und 10 mm auf. Ferner können die Vertiefungen 6 in gleichmäßigen Abständen oder ungleichmäßig, d. h. stochastisch in dem Gas-Einströmbereich 4 verteilt sein. Weiter können die Vertiefungen 6 spanend oder spanlos hergestellt werden. Die spanende Bearbeitung kann beispielsweise durch Drehen oder Fräsen erfolgen, im Falle der spanlosen Herstellung kommen bevorzugt Gießverfahren zum Einsatz. In einer weiteren Ausführungsvariante können die Vertiefungen 6, egal in welcher der oben genannten Ausführungen, auch in einem separaten, in den Gas-Ansaugstutzen 3 einbringbares Rohr angeordnet sein.

Im Folgenden wird die Erfindung in anderen Worten anhand des besonders bevorzugten Ausführungsbeispieles nochmals erläutert:

Eine strömungsoptimierte Grundkontur wird im Prinzip für den Verdichter 1 beibehalten, jedoch durch radiale Hinterschneidungen 8 (diese können auch als einfache Nuten oder Löcher ausgeführt sein) modifiziert. Diese Vertiefungen 6 können mit maschineller Bearbeitung, durch Einschieben von Einsätzen oder auch gusstechnisch gefertigt werden.

Die Hinterschneidungen 8 befinden sich prinzipiell nicht im Bereich der Verdichterschaufeln, sondern im Verdichtereinlauf. Es handelt sich damit nicht um eine Art Bypass, wie sie aus dem oben zitierten Stand der Technik mit den bekannten akustischen Schwächen bekannt ist.

Akustische Wirkungsweise: Sowohl die an den Schaufeln des Verdichterrades 5 entstehenden, als auch die reflektierten Schallwellen gelangen zum Teil in die Hinterschneidungen 8 und werden dort, auch mehrfach, reflektiert. Bei der Wiedervereinigung mit der direkten Welle ergibt sich im Gesamten eine zeitliche Aufweitung und eine damit verbundene Abschwächung der Stoßwellen.

Strömungstechnische Wirkungsweise: Im Normalbetrieb wird die einströmende Luft im Vergleich zur ursprünglichen Geometrie kaum beeinflusst. Im Pumpfall gelangt die rückströmende Luft in die Hinterschneidung bzw. in die Vertiefung 6, wo sie entlang des Umfangs rotiert. Es ergibt sich insgesamt ein größerer Rückströmungswiderstand, der das Pumpen in Dauer und Amplitude abschwächt. Die Pumpegrenze des Verdichters 1 wird durch die Vertiefungen 6 nicht verschoben.

Somit ergeben sich Vorteile in folgenden Bereichen:
Akustik: Strömungsgeräusche im Normalbetrieb und akustische Auswirkungen im Pumpfall werden reduziert.
Strömung: Die Luftmassenschwingung wird beim Pumpen reduziert, die Ansaugströmung im Normalbetrieb wird vergleichmäßigt.
Kosten: Die erfindungsgemäße Ausgestaltung ist in bestehende Technik integrierbar, großvolumige und teure Resonatoren in der Luftführung können entfallen.

### Bezugszeichenliste:

- 1.: Verdichter
- 1': Achse
- 2.: Abgasturboladergehäuse
- 3.: Gas-Ansaugstutzen
- 4.: Gas-Einströmbereich
- 5.: Verdichterrad
- 6.: Vertiefungen
- 7.: Reinluftrohr
- 8.: Hinterschneidung

## Patentansprüche

1. Abgasturbolader, wobei ein Abgasturboladergehäuse (2) einen Gas-Ansaugstutzen (3) für einen Verdichter (1) aufweist, wobei der Gas-Ansaugstutzen (3) einen Gas-Einströmbereich (4) radial weitgehend umschließt und wobei in dem Abgasturboladergehäuse (2) ein von einer Abgasturbine antreibbares Verdichterrad (5) angeordnet ist, das den Gas-Einströmbereich im Gas-Ansaugstutzen (3) in Strömungsrichtung eines Gases begrenzt, wobei der Gas-Ansaugstutzen (3) einströmbereichsseitig Vertiefungen (6) aufweist, die in einer Strömungsrichtung bis zum Verdichterrad (5) in den Gas-Ansaugstutzen (3) eingebracht sind,
**dadurch gekennzeichnet, dass** die Vertiefungen (6) umlaufende Radialnuten sind, die eine Hinterschneidung (8) entgegen der Strömungsrichtung aufweisen.

2. Verdichter nach Patentanspruch 1,
**dadurch gekennzeichnet, dass** die Vertiefungen (6) zwischen 0,5 mm und 5 mm in den Gas-Ansaugstutzen (3) ragen.

3. Verdichter nach Patentanspruch 1 oder 2,
**dadurch gekennzeichnet, dass** die Vertiefungen (6) einen Durchmesser bzw. eine Breite zwischen 0,5 mm und 10 mm aufweisen.

4. Verdichter nach einem der Patentansprüche 1 bis 3,
**dadurch gekennzeichnet, dass** die Vertiefungen (6) gleichmäßig oder ungleichmäßig verteilt sind.

5. Verdichter nach einem der Patentansprüche 1 bis 4,
**dadurch gekennzeichnet, dass** die Vertiefungen (6) spanend oder spanlos herstellbar sind.

6. Verdichter nach einem der Patentansprüche 1 bis 5,
**dadurch gekennzeichnet, dass** die Vertiefungen (6) in einem separaten, in den Gas-Ansaugstutzen (3) einbringbaren Rohr angeordnet sind.

## Claims

1. A turbocharger, wherein a turbocharger casing (2) contains a gas intake nozzle (3) for a compressor (1), wherein the gas intake nozzle (3) radially surrounds most of a gas inflow region (4) and wherein a compressor wheel (5) drivable by an exhaust-gas turbine is disposed in the turbocharger casing (2) and bounds the gas inflow region in the gas intake nozzle (3) in the direction of flow of a gas, wherein the gas intake nozzle (3), on the inflow side, has recesses (6) formed in the direction of flow up to the compressor wheel (5) in the gas intake nozzle (3), **characterised in that** the recesses (6) are peripheral radial grooves with undercuts (8) opposite the direction of flow.

2. A compressor according to claim 1, **characterised in that** the recesses (6) extend between 0.5 and 5 mm into the gas intake nozzle (3).

3. A compressor according to claim 1 or claim 2, **characterised in that** the recesses (6) have a diameter or width between 0.5 and 10 mm.

4. A compressor according to any of claims 1 to 3, **characterised in that** the recesses (6) are uniformly or non-uniformly distributed,.

5. A compressor according to any of claims 1 to 4, **characterised in that** the recesses (6) are produced with or without metal-cutting.

6. A compressor according to any of claims 1 to 5, **characterised in that** the recesses (6) are disposed in a separate tube insertable into the gas intake nozzle (3).

## Revendications

1. Turbocompresseur de gaz d'échappement avec un boîtier de turbocompresseur (2) comportant un ajutage d'aspiration de gaz (3) pour un compresseur (1),
- l'ajutage d'aspiration de gaz (3) entourant très largement radialement une zone d'entrée de gaz (4), et
- le boîtier (2) du turbocompresseur loge un rotor de compresseur (5) entraîné par une turbine à gaz, ce rotor délimitant la zone d'entrée de gaz dans l'ajustage d'aspiration de gaz (3) dans la direction de passage des gaz,
- l'ajutage d'aspiration de gaz (3) comportant des cavités (6) du côté de la zone d'entrée prévue dans la direction de l'écoulement jusqu'au rotor de compresseur (5) dans l'ajutage d'aspiration de gaz (3),
turbocompresseur **caractérisé en ce que**
les cavités (6) sont des rainures radiales périphériques comportant une contre-dépouille (8) opposée à la direction de l'écoulement.

2. Turbocompresseur selon la revendication 1,
**caractérisé en ce que**
les cavités (6) viennent en saillie dans l'ajutage d'aspiration de gaz (3) sur une profondeur comprise entre 0,5 mm et 5 mm.

3. Turbocompresseur selon la revendication 1 ou 2,
**caractérisé en ce que**
les cavités (6) ont un diamètre ou une largeur comprise entre 0,5 et 10 mm.

4. Turbocompresseur selon l'une des revendications 1 à 3,
**caractérisé en ce que**
les cavités (6) sont réparties régulièrement ou irrégulièrement.

5. Turbocompresseur selon l'une des revendications 1 à 4,
**caractérisé en ce que**
les cavités (6) sont réalisées par un usinage avec enlèvement de copeaux ou par un usinage sans enlèvement de copeaux.

6. Turbocompresseur selon l'une des revendications 1 à 5,
**caractérisé en ce que**
les cavités (6) sont prévues dans un tube séparé que l'on installe dans l'ajutage d'aspiration des gaz (3).
